# EUROPÄISCHE PATENTSCHRIFT

(11) **EP 1 967 247 B1**
(45) Veröffentlichungstag und Bekanntmachung des Hinweises auf die Patenterteilung: **05.09.2012**
(21) Anmeldenummer: 07103403.7
(22) Anmeldetag: 02.03.2007
(51) Int. Cl.: B01D 46/24, B01D 46/00

(54) **Druckluft-Filter und zugehöriger Adapter**
Compressed air filter and related adapter
Filtre à air comprimé et adapteur adéquat

(43) Veröffentlichungstag der Anmeldung: 10.09.2008
(73) Patentinhaber: Kaeser Kompressoren AG, 95450 Coburg (DE)
(72) Erfinder: Feisthauer, Michael, 96484 Meeder (DE); Fischer, Norbert, 96484 Meeder (DE)
(74) Vertreter: Zech, Stefan Markus

(56) Entgegenhaltungen:
- EP-A1- 1 310 665
- WO-A-99/30799
- WO-A-02/053258
- WO-A-2005/118105
- DE-A1- 10 052 524
- DE-A1- 10 309 428
- US-A- 4 585 924
- US-A- 5 291 863
- US-B1- 6 245 232

## Beschreibung

Die Erfindung betrifft einen Druckluftfilter-Adapter zum Anschluss eines Filterelements an ein Filteranschlussgehäuse, wobei der Adapter einen durch eine Wandung umschlossenen Strömungskanal für Druckluft aufweist, wobei der Strömungskanal an einem ersten Ende durch eine erste Öffnung und an einem zweiten Ende durch eine zweite Öffnung begrenzt wird, wobei die erste Öffnung zum Anschluss an ein Filteranschlussgehäuse vorgesehen ist und einen ersten Öffnungsquerschnitt ausbildet, und wobei die zweite Öffnung eine filterseitige Öffnung definiert und einen zweiten Öffnungsquerschnitt ausbildet, sowie ein Verfahren zum Anschließen eines Filterelements an ein Filteranschlussgehäuse.

Filteranordnungen für Druckluft sind aus dem Stand der Technik, beispielsweise aus der EP 1 042 043 B1, hinlänglich bekannt. Meist werden derartige Druckluftanordnungen seriell in einen Druckluftstrom eingesetzt derart, dass die gesamte Druckluft des Druckluftstromes über ein Filterelement geführt wird. Da das Filterelement seiner Filterfunktion entsprechend über längere Betriebszeiten zusetzt, also Schmutzpartikel innerhalb des Filterelements aufgefangen werden, muss es in festgelegten oder variablen Wartungsintervallen ersetzt werden. Um diesen Prozess des Ersetzens des Filterelements zu erleichtern, sitzt das Filterelement in einem Filteranschlussgehäuse, wobei das Filteranschlussgehäuse fest mit der den Druckluftstrom führenden Leitung verbunden bleibt.

Allerdings können im Filteranschlussgehäuse aufgrund der verschiedenen Zielsetzungen, nämlich raumsparender Einbau in die zu filternde Druckluft führende Leitung, Zugänglichkeit, des Filterelements, sowie zuverlässige Abdichtung zwischen Filterelement und Filteranschlussgehäuse beengte Strömungsverhältnisse entstehen.

In der DE 100 52 524 A1 ist ein Filter mit einem mehrteiligen Gehäuse offenbart. Das Gehäuse weist einen Gehäusekörper und einen Gehäusekopf auf, wobei der Gehäusekopf einen Einlass für einen zu reinigenden Gasstrom und einen Auslass hat. Das Gehäuse weist ein Filterelement auf, das einen Elementkopf und einen rohrförmigen Elementkörper aufweist. In der DE 103 09 428 A1 ist ein Filter offenbart, der aus einem Oberteil und einem Unterteil besteht, zwischen denen ein Anschlussflansch angeordnet ist. Das Oberteil besitzt zwei Anschlussadapter, über die sich der Filter beispielsweise in eine Druckluftleitung einfügen lässt.

Die Aufgabe der vorliegenden Erfindung besteht darin, einen Druckluftfilter-Adapter vorzuschlagen, der einen einfachen und zuverlässigen Anschluss eines Filterelements an ein Filteranschlussgehäuse gewährleistet und gleichzeitig eine vergleichsweise günstige Strömungsführung im Filteranschlussgehäuse ermöglicht.

Diese Aufgabe wird mit einem Druckluftfilter-Adapter nach den Merkmalen des Anspruches 1 gelöst.

Vorteilhafte Weiterbildungen sind in den Unteransprüchen angegeben.

Ein Kerngedanke der vorliegenden Erfindung besteht darin, dass beim erfindungsgemäßen Druckluftfilter-Adapter erste und zweite Öffnung derart zueinander versetzt sind, dass der Flächenschwerpunkt der ersten Öffnung gegenüber der vom Flächenschwerpunkt der zweiten Öffnung ausgehenden Normalen in eine Versatzrichtung verschoben ist und dass der erste Öffnungsquerschnitt eine von der Kreisform abweichende Grundform aufweist, wobei bezogen auf die Versatzrichtung eine Verengung sowie eine Erweiterung definiert sind. Der Adapter ist so ausgestaltet, dass in der Projektion des ersten Öffnungsquerschnittes auf den zweiten Öffnungsquerschnitt der erste Öffnungsquerschnitt teilweise außerhalb des zweiten Öffnungsquerschnittes liegt.

Vorteilhafte Weiterbildungen sind in den Unteransprüchen angegeben.

Durch die versetzte Anordnung der Öffnungen sowie die nicht rotationssymmetrische Ausbildung des ersten Öffnungsquerschnitts wird erreicht, dass im Filteranschlussgehäuse auf der der Versatzrichtung entgegenliegenden Seite Freiraum gewonnen wird, der strömungstechnisch und/oder für weitere Einbauten genutzt werden kann.

In einer bevorzugten Ausgestaltung ist die Erweiterung in Versatzrichtung (R) und die Verengung entgegen der Versatzrichtung (R) ausgebildet. Insofern wird der Gedanke des größeren Freiraums in der der Versatzrichtung entgegengesetzten Richtung noch verstärkt, da Raumgewinn auf der der Versatzrichtung entgegenliegenden Seite nicht nur durch den Versatz selbst sondern auch durch die nicht rotationssymmetrische Ausbildung des ersten Öffnungsquerschnitts erzielt wird.

Gemäß einem Grundgedanken der vorliegenden Erfindung, der auch unabhängig von der nicht rotationssymmetrische Ausbildung des ersten Öffnungsquerschnitts beansprucht wird, ist ein Freiraum im Filteranschlussgehäuse bereits dadurch zu gewinnen, dass ein rein in Kreisform vorliegender erster Öffnungsquerschnitt in Versatzrichtung versetzt wird. Dadurch, dass zusätzlich eine nicht rotationssymmetrische Ausbildung des ersten Öffnungsquerschnitts vorgenommen wird, wird der Effekt noch verstärkt.

In einer ersten konkreten Ausgestaltung kann der erste Öffnungsquerschnitt die Grundform eines gleichschenkligen Dreiecks aufweisen, wobei der der Spitze des gleichschenkligen Dreiecks zugewandte Bereich die Verengung und der der Basis zugewandte Bereich die Erweiterung des ersten Öffnungsquerschnitts ausbilden.

In einer konkretisierten Ausgestaltung weist dabei der erste Öffnungsquerschnitt die Grundform eines gleichschenkligen Dreiecks auf, bei dem die Ecken gerundet ausgebildet sind.

In einer konkreten, bevorzugten Ausgestaltung sind erster Öffnungsquerschnitt und zweiter Öffnungsquerschnitt im Wesentlichen parallel zueinander angeordnet.

In einer ersten möglichen Ausführungsform kann der Adapter als separates Bauteil zum Anschluss sowohl an ein Filterelement als auch an das Filteranschlussgehäuse ausgebildet sein.

In einer alternativen Ausführungsform kann der Adapter integral an das Filterelement angeformt sein und mit diesem eine Filtereinheit ausbilden.

Obwohl der durch den erfindungsgemäßen Versatz sowie die nicht rotationssymmetrische Ausbildung des ersten Öffnungsquerschnitts gewonnene "Freiraum" auch für andere Einbauten, Strömungskanäle, etc. genutzt werden kann, ist in einer bevorzugten Ausgestaltung vorgesehen, dass der Adapter vom in das Filterelement eintretenden bzw. vom Filterelement austretenden Luftstrom umströmt wird. In dieser konkreten Ausgestaltung bildet die Wandung des Adapters eine außenliegende Strömungsleitfläche aus bzw. weist eine solche Strömungsleitfläche auf.

In einer bevorzugten Ausgestaltung ist die Strömungsleitfläche so ausgebildet, dass sie dem Versatz zwischen erster Öffnung und zweiter Öffnung zumindest im Wesentlichen folgt.

Weiter kann vorgesehen sein, dass in dieser Projektion auch der zweite Öffnungsquerschnitt teilweise außerhalb des ersten Öffnungsquerschnittes liegt.

Schließlich kann auch vorgesehen sein, dass in der Projektion des zweiten Öffnungsquerschnittes auf den ersten Öffnungsquerschnitt der erste Öffnungsquerschnitt teilweise außerhalb des zweiten Öffnungsquerschnittes liegt bzw. auch in dieser Projektion der zweite Öffnungsquerschnitt teilweise außerhalb des ersten Öffnungsquerschnitts liegt.

Weiter kann beim erfindungsgemäßen Adapter an der Wandung eine umlaufende Dichteinrichtung zur Herstellung einer fluiddichten Abdichtung gegenüber dem Filteranschlussgehäuse bei in Betriebsposition eingesetztem Filterelement ausgebildet sein.

Zur Erfindung gehörig ist auch ein Filterelement umfassend ein Filterelement mit einer flächigen Ein- bzw. Ausströmfläche, wobei das Filterelement eine zylindrische Grundstruktur aufweist, sowie einem integral angeformten Adapter, wie vorstehend beschrieben, anzusehen.

Weiter wird auch eine Filteranordnung beansprucht umfassend ein Filteranschlussgehäuse, ein Filterelement sowie einen Adapter, wie hier beschrieben und beansprucht, wobei der Adapter zum Anschluss des Filterelements an das Filteranschlussgehäuse vorgesehen ist.

Schließlich wird ein Verfahren zum Anschließen eines Filterelements an ein Filteranschlussgehäuse beansprucht, wobei das Filteranschlussgehäuse eine erste Strömungsöffnung sowie eine zweite Strömungsöffnung aufweist, wobei ein Adapter zum Anschluss des Filterelements an das Filteranschlussgehäuse verwendet wird, wobei der Adapter einen durch eine Wandung umschlossenen Strömungskanal für Druckluft aufweist, wobei der Strömungskanal an einem ersten Ende durch eine erste Öffnung und an einem zweiten Ende durch eine zweite Öffnung begrenzt wird, wobei die erste Öffnung zum Anschluss an ein Filteranschlussgehäuse vorgesehen ist und einen ersten Öffnungsquerschnitt ausbildet, und wobei die zweite Öffnung eine filterseitige Öffnung definiert und einen zweiten Öffnungsquerschnitt ausbildet, wobei erste und zweite Öffnung zueinander versetzt sind, derart dass der Flächenschwerpunkt der ersten Öffnung gegenüber der vom Flächenschwerpunkt der zweiten Öffnung ausgehenden Normalen in eine Versatzrichtung (R) verschoben ist, wobei der erste Öffnungsquerschnitt eine von der Kreisform abweichende Grundform mit einer Verengung und einer der Verengung gegenüberliegenden Erweiterung aufweist, wobei in der Projektion des ersten Öffnungsquerschnitts (16) auf den zweiten Öffnungsquerschnitt (17) der erste Öffnungsquerschnitt teilweise außerhalb des zweiten Öffnungsquerschnitts (17) liegt, und wobei das Filterelement über einen Adapter druckfluiddicht mit dem Filteranschlussgehäuse derart verbunden wird, dass der Strömungsweg von der ersten Strömungsöffnung zur zweiten Strömungsöffnung über das Filterelement geführt ist.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Fig. 1: eine erste Ausführungsform einer erfindungsgemäßen Filteranordnung in perspektivischer Explosionsansicht
- Fig. 2: eine Schnittansicht durch die Filteranordnung nach Fig. 1 entlang der Linie II II in Fig. 3
- Fig. 3: eine Schnittansicht der Filteranordnung nach Fig. 1 entlang der Linie III III in Fig. 2
- Fig. 4: eine zweite Ausführungsform der erfindungsgemäßen Filteranordnung in perspektivischer Explosionsansicht
- Fig. 5: eine Schnittansicht durch die Filteranordnung nach Fig. 4 entlang der Linie V V in Fig. 6
- Fig. 6: eine Schnittansicht der Filteranordnung nach Fig. 4 entlang der Linie VI VI in Fig. 5
- Fig. 7: eine Schnittansicht durch eine Ausführungsform eines erfindungsgemäßen Adapters
- Fig. 8: eine perspektivische Ansicht der Ausführungsform des erfindungsgemäßen Adapters nach Fig. 7
- Fig. 9: eine Prinzipansicht zur Veranschaulichung des durch den Versatz erreichten Effekts bei einem Filteranschlussgehäuse mit gleichen Außenkonturen

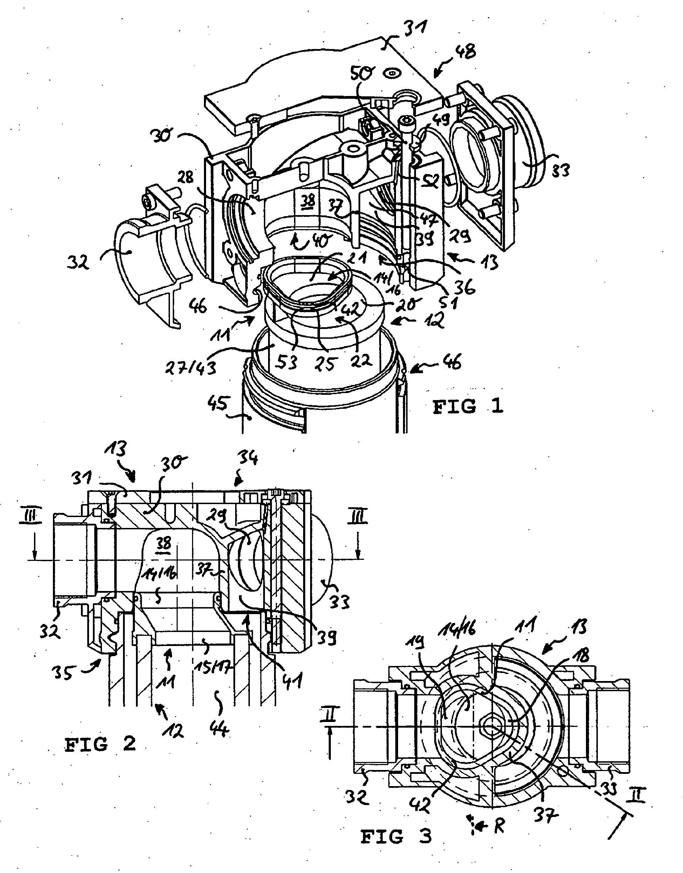

In Fig. 1 ist eine Ausführungsform einer erfindungsgemäßen Filteranordnung in perspektivischer Explosionsansicht dargestellt. Die Filteranordnung umfasst zunächst ein Filteranschlussgehäuse 13 mit einer ersten Strömungsöffnung 28 und einer zweiten Strömungsöffnung 29. In einer konkreten Ausgestaltung kann die erste Strömungsöffnung 28 des Filteranschlussgehäuses 13 eine Einströmöffnung und die zweite Strömungsöffnung 29 des Filteranschlussgehäuses 13 eine Ausströmöffnung definieren. Die Durchströmungsrichtung könnte allerdings auch entgegengesetzt gerichtet sein.

Das Filteranschlussgehäuse 13 besteht in der vorliegenden Ausführungsform aus einem Grundkörper 30, einem an einer Oberseite 34 vorgesehenen Deckel 31, sowie zwei Anschlussflanschen 32, 33 an der ersten Strömungsöffnung 28 bzw. zweiten Strömungsöffnung 29 zum Anschluss in eine Druckfluidleitung bzw. zum Anschluss einer weiteren Druckfluid durchströmten Komponente, beispielsweise einem weiteren Filterelement.

An einer der Oberseite 34 gegenüberliegenden Unterseite 35 weist das Filteranschlussgehäuse 13 eine Filteranschlussöffnung 36 auf, um über einen Adapter 11 ein Filterelement 12 druckfluiddicht an das Filteranschlussgehäuse 13 anschließen zu können.

Zu diesem Zweck ist ein Innenraum des Filteranschlussgehäuses 13 durch eine nach unten offene Trennwand 37 in eine erste Kammer 38 sowie eine zweite Kammer 39 unterteilt. Dabei schließt sich die erste Kammer 38 an die erste Strömungsöffnung 28 an. Die zweite Kammer 39 schließt sich hingegen an die zweite Strömungsöffnung 29 an. Die erste Kammer 38 wird dabei von der zweiten Kammer 39 teilweise umschlossen, so dass die erste Kammer 38 auch als teilweise umschlossene, die zweite Kammer 39 als teilweise umschließende Kammer bezeichnet werden könnte. Die erste Kammer 38 ist der Unterseite 35 des Filteranschlussgehäuses 13 zugewandt offen unter Ausbildung einer im Querschnitt im wesentlichen dreieckförmigen Anschlussöffnung 40 ausgebildet. Die zweite Kammer 39 ist an ihrem der Unterseite 35 zugewandten Ende ebenfalls unter Ausbildung einer Öffnung 41 offen ausgebildet.

Das Filterelement 12 wird über dem bereits erwähnten Adapter 11 über die Filteranschlussöffnung 36 druckfluiddicht in das Filteranschlussgehäuse 13 eingesetzt. Hierzu weist der Adapter 11 ein der Anschlussöffnung 40 der ersten Kammer 38 entsprechendes Anschlussprofil 42 auf. Das Anschlussprofil 42 des Adapters 11 umschließt dabei eine erste Öffnung 14 im Adapter 11, wobei diese erste Öffnung 14 einen ersten Öffnungsquerschnitt 16 von ebenfalls im Wesentlichen dreiecksförmiger Gestalt aufweist. Sowohl bei der dreiecksförmigen Gestaltung der Anschlussöffnung 40 als auch bei der im Wesentlichen dreiecksförmigen Gestaltung des ersten Öffnungsquerschnittes 16 liegt ein im wesentlichen gleichseitiges Dreieck mit abgerundeten Ecken vor. Da der das Anschlussprofil 42 ausbildende Rand des Adapters 11 über den gesamten Umfang bei der vorliegenden Ausführungsform gleich stark bemessen ist, entspricht der erste Öffnungsquerschnitt 16 zuzüglich des umlaufenden Randes einheitlicher Stärke und einer definierten Einschubtoleranz dem Querschnitt der Anschlussöffnung 40 im Filteranschlussgehäuse 13. Außen an dem das Anschlussprofil 42 ausbildenden Rand des Adapters 11 ist noch eine umlaufende Dichteinrichtung 25 in einer umlaufenden Nut 53 gehalten, wobei die Dichteinrichtung 25 eine Abdichtung zwischen der Außenseite des Anschlussprofils 42 des Adapters 11 und der Innenwandung der ersten Kammer 38 im Filteranschlussgehäuse bewirkt.

Durch die dreiecksförmige Gestaltung der Anschlussöffnung 40 sowie des Anschlussprofils 42 des Adapters 11 wird gleichzeitig eine Verdrehsicherung dergestalt definiert, dass das Filterelement 12 nur in exakt vorgegebener Winkelposition eingesetzt werden kann. Aufgrund des Versatzes des Adapters 11 ist es mit insofern zunächst drei Positioniermöglichkeiten nur möglich trotz der Ausbildung von Anschlussöffnung 40 und Anschlussprofil 42 in Gestalt eines gleichseitigen Dreiecks den Adapter 11 bzw. das Filterelement 12 so einzusetzen, dass die Seite des Anschlussprofils 42, die gegenüber der Mittelachse des Filterelements 12 am weitesten entfernt liegt, der ersten Strömungsöffnung 28 des Filteranschlussgehäuses 13 zugewandt ist.

Unter Bezugnahme auf die Fig. 1 bis 3 wird nun die Gestaltung der hier vorliegenden Ausführungsform des Adapters 11 im Einzelnen besprochen.

Der Adapter 11 ist hier mit dem Filterelement 12 dauerhaft verbunden, nämlich direkt stirnseitig an einem zylinderförmigen Filtermantel 43 befestigt, der gleichzeitig eine Ein- bzw. Ausströmfläche 27 des Filterelements 12, hier konkret eine Ausströmfläche definiert. Innerhalb des Filterelements 12 ist ein zentraler Kanal 44 vorgesehen, von dem aus das Druckfluid die Filtermaterialien durchtritt und am Filtermantel 43 austritt.

In einer alternativen Ausführungsform könnte die Strömungsrichtung auch umgekehrt sein, das heißt das Druckfluid könnte am Filtermantel 43 eintreten, die Filtermaterialien durchströmen und im zentralen Kanal 44 gesammelt und aus dem Filterelement 12 ausgeführt werden.

Der Adapter 11 weist einen durch eine Wandung 20 umschlossenen Strömungskanal 21 für das Druckfluid auf. Innerhalb des Strömungskanals 21 wird das Druckfluid von der ersten Öffnung 14 an eine filterseitige zweite Öffnung 15 geführt, die einen zweiten Öffnungsquerschnitt 17 definiert. Erste Öffnung 14 und zweite Öffnung 15 des Adapters 11 sind gegeneinander versetzt, nämlich so, dass der Flächenschwerpunkt der ersten Öffnung 14 gegenüber der vom Flächenschwerpunkt der zweiten Öffnung 15 ausgehenden Normalen in eine Versatzrichtung (R), konkret etwa um einen Versatz von 3 mm bis 30 mm, bevorzugt etwa von 10 mm bis 20 mm, insbesondere um etwa 15 mm, verschoben ist.

Über die den Strömungskanal 21 definierende Wandung 20 wird der dreiecksförmige Öffnungsquerschnitt 16 der ersten Öffnung 14 in den zweiten Öffnungsquerschnitt 17 der zweiten Öffnung 15 überführt. Bei der hier konkret dargestellten Ausführungsform ist der zweite Öffnungsquerschnitt 17 kreisförmig ausgebildet. Weiter ist die Wandung 20 so gestaltet, dass der Strömungskanal 21 über seinen Verlauf eine zumindest im Wesentlichen gleiche Querschnittsfläche aufweist.

Das Filterelement 12 ist in einer zylinderförmigen, endseitig geschlossenen Filterabdeckkappe 45 aufgenommen. Die Filterabdeckkappe 45 lässt sich druckfluiddicht mit dem Filteranschlussgehäuse 13, insbesondere über einen Bajonettverschluss 46 verschließen. Sofern eine druckfluide Verbindung zwischen Filteranschlussgehäuse 13 und Filterabdeckkappe 45 über einen Bajonettverschluss 46 vorgenommen wird, ist das Filterelement 12 drehbeweglich in der Filterabdeckkappe 45 aufgenommen, da es beim An- bzw. Einsetzen an das Filteranschlussgehäuse 13 drehfest mit seinem Anschlussprofil 42 in die erste Kammer 38 eingreift.

Wie insbesondere aus Fig. 2 erkennbar wird, wird durch den Versatz des Adapters 11 in Richtung auf die erste Strömungsöffnung 28 an der gegenüberliegenden Seite, konkret in dem an die zweite Strömungsöffnung 29 angrenzenden Bereich ein Freiraum bzw. Vorraum 47 geschaffen, der strömungstechnisch vorteilhaft ist, nämlich bei der konkreten Ausführungsform ein verbessertes Ausströmen des Druckfluids aus dem Filteranschlussgehäuse 13 über die zweite Strömungsöffnung 29 gewährleistet. Konkret kann das aus dem Filtermantel 43 austretende innerhalb der Filterabdeckkappe 45 in Richtung auf das Filteranschlussgehäuse 13 zurückgeführte Druckfluid im Bereich des Adapters 11, der mit seiner Wandung 20 an deren Außenseite eine Strömungsleitfläche 22 definiert, zusammengeführt und in Richtung auf die zweite Strömungsöffnung 29 gesammelt werden. Das Volumen des Vorraums 47 gewährleistet, dass das Druckfluid mit nur sehr geringem Strömungswiderstand am Adapter 11 vorbei und aus der zweiten Strömungsöffnung 29 ausgeleitet werden kann.

Es wird somit eine Filteranordnung mit geringen Strömungsverlusten im Ein- und Ausströmbereich umfassend das beschriebene Filterelement 12, die Filterabdeckkappe 45, das Filteranschlussgehäuse 13 sowie den Adapter 11 zur Verbindung von Filterelement 12 und Filteranschlussgehäuse 13 vorgeschlagen. Das Filterelement 12 ist dabei wie auch die Filterabdeckkappe 45 von zylindrischer Gestalt, vorzugsweise von kreiszylindrischer Gestalt. Das Filterelement 12 weist eine Längsmittelachse auf, die orthogonal zur Flächennormalen der ersten Strömungsöffnung 28 und/oder der zweiten Strömungsöffnung 29 ausgerichtet ist. Der Flächenschwerpunkt des ersten Öffnungsquerschnitts 16 der ersten Öffnung 14 im Adapter 11 liegt gegenüber der Längsmittelachse des Filterelements 12 versetzt. In Versatzrichtung ist eine Erweiterung 19 und entgegen der Versatzrichtung eine Verengung 18 des ersten Öffnungsquerschnittes 16 definiert derart, dass möglichst viele Flächenanteile gegenüber der Längsmittelachse des Filterelements 12 innerhalb der ersten Öffnung 14 auf eine Seite hin, insbesondere auf die der ersten Strömungsöffnung 28 zugewandte Seite hin verschoben werden. Entsprechend weist auch die erste Kammer 38 eine solche gegenüber einer Mittelachse bzw. Mittelebene versetzte Geometrie auf. Konkret ist die erste Kammer 38 angrenzend an die erste Strömungsöffnung 28 angeordnet und erstreckt sich in einen zentralen Bereich des Filteranschlussgehäuses 13. Die zweite Kammer 39 ist der zweiten Strömungsöffnung 29 angrenzend ausgebildet und erstreckt sich peripher, die erste Kammer 38 teilweise umschließend.

Wie sich insbesondere aus Fig. 3 ergibt, liegt in der Projektion des ersten Öffnungsquerschnittes 16 auf den zweiten Öffnungsquerschnitt 17 der erste Öffnungsquerschnitt 16 teilweise außerhalb des zweiten Öffnungsquerschnittes 17. Gleichzeitig liegt in dieser Projektion auch der zweite Öffnungsquerschnitt 17 teilweise außerhalb des ersten Öffnungsquerschnittes 16. Da bei der konkreten Ausführungsform erster Öffnungsquerschnitt 16 und zweiter Öffnungsquerschnitt 17 parallel zueinander angeordnet sind, entspricht die Projektion des ersten Öffnungsquerschnittes 16 auf den zweiten Öffnungsquerschnitt 17 natürlich der Projektion des zweiten Öffnungsquerschnittes 17 auf den ersten Öffnungsquerschnitt 16.

Das Filteranschlussgehäuse kann noch eine Entlüftungsvorrichtung 48 mit einer abdichtenden Scheibe 49 umfassen, wobei eine Sicherungsschraube 50 in einer Bohrung 51 mit entsprechendem Innengewinde einschraubbar ist, wobei die Sicherungsschraube 50 gleichzeitig den Bajonettverschluss 46 derart sperrt, dass Filterabdeckkappe 45 und Filteranschlussgehäuse 13 druckfluiddicht im Eingriff stehen.

Über eine Verbindungsbohrung 52, die an einem äußeren Ende durch die abdichtende Scheibe 49 druckfluiddicht überdeckt werden kann und mit dem Innenraum des Filteranschlussgehäuses 13 kommuniziert, wird sichergestellt, dass sich erst dann, wenn die Sicherungsschraube 50 angezogen ist und die abdichtende Scheibe 49 auf die Verbindungsbohrung 52 drückt, ein Druck im Filteranschlussgehäuse 13 aufbauen kann. Ist der Bajonettverschluss 46 somit nicht korrekt verschlossen, kann die Sicherungsschraube 50 nicht in korrekter Position eingeschraubt werden, so dass die Verbindungsbohrung 52 nicht verschlossen werden kann und sich im Filteranschlussgehäuse 13 kein Druck aufbauen lässt. Ist hingegen die Sicherungsschraube 50 korrekt eingeschraubt, wird der Bajonettverschluss 46 blockiert und die Verbindungsbohrung 52 durch die abdichtende Scheibe 49 verschlossen, so dass die Filteranordnung in Betrieb gesetzt werden kann.

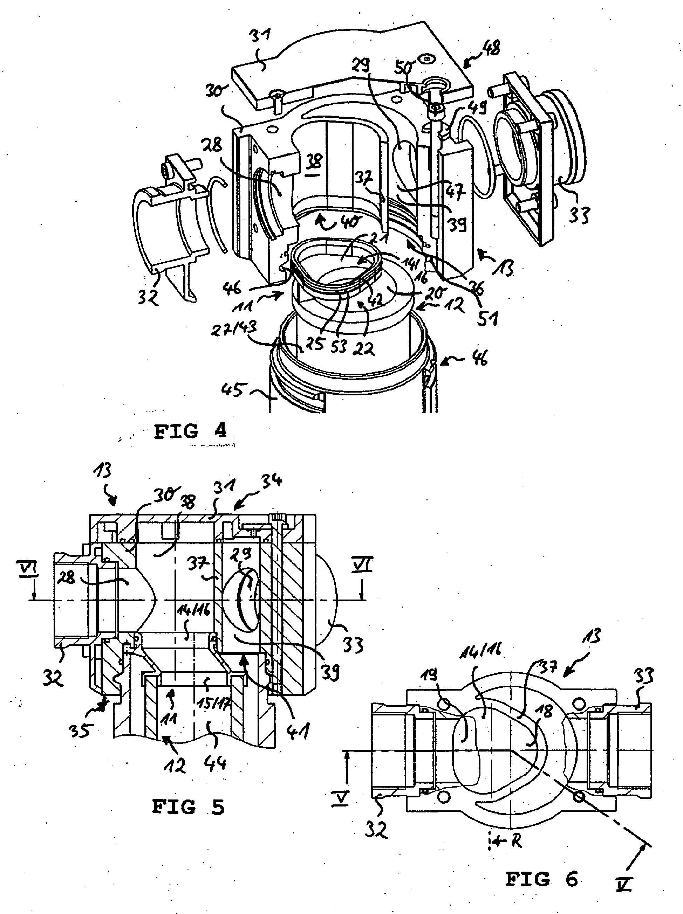

Eine alternative Ausführungsform einer erfindungsgemäßen Filteranordnung ist in den Figuren 4 bis 6 veranschaulicht. Der Aufbau der Filteranordnung nach den Figuren 4 bis 6 entspricht weitestgehend dem Aufbau der Filteranordnung nach den Figuren 1 bis 3, wobei allerdings das Filteranschlussgehäuse 13 als Strangpressprofil ausgebildet ist. Insofern ist die erste Kammer 38 innerhalb des Grundkörpers 30 des Filteranschlussgehäuses 13 zunächst rein zylindrisch, nämlich in einer Querschnittsform eines gleichschenkligen Dreiecks mit abgerundeten Ecken ausgebildet, wobei die erste Kammer 38 dem Filterelement 12 abgewandt direkt durch den Deckel 31 verschlossen ist.

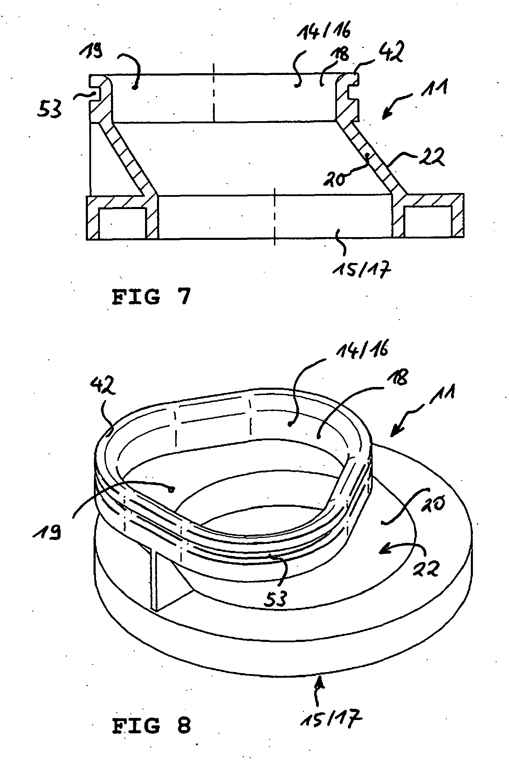

In den Figuren 7 und 8 ist die bei den Filteranschlussgehäusen gemäß den Figuren 1 bis 3 bzw. Figuren 4 bis 6 zum Einsatz gelangende Ausführungsform eines erfindungsgemäßen Adapters zum Anschluss eines Filterelements nochmals separat veranschaulicht, wobei diesbezüglich auf die Ausführungen zu den Figuren 1 bis 3 verwiesen wird.

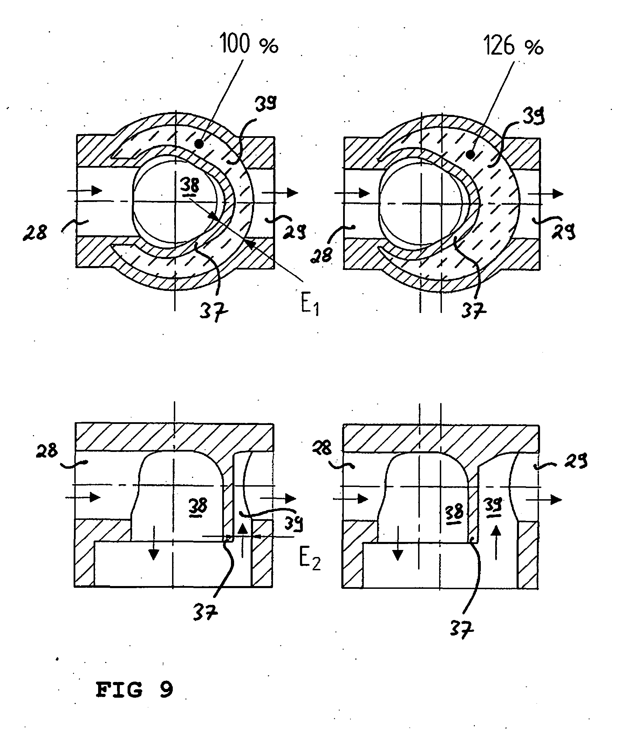

In Fig. 9 ist zu Veranschaulichungszwecken der durch den Versatz des Adapters 11 erreichte Effekt im Ein- bzw. Ausströmbereich des Filteranschlussgehäuses 13 veranschaulicht. Unter Annahme einer gleichen Außenkontur des Filteranschlussgehäuses ist in der Gegenüberstellung links die Situation nach dem Stand der Technik, rechts dagegen die durch den Versatz der ersten Kammer 38 in Richtung auf die erste Strömungsöffnung 28 erzielte Vergrößerung der zweiten Kammer 39 veranschaulicht. Bei dem konkret vorgeschlagenen Versatz des Flächenschwerpunktes der Anschlussöffnung 40 der ersten Kammer 38 aus einer zentralen auf die Längsmittelachse ausgerichtete Position zurück auf die erste Strömungsöffnung 28 um 15 mm lässt sich der Querschnitt der zweiten Kammer entlang der Längsmittelebene durch die erste Strömungsöffnung 28 und zweite Strömungsöffnung 29 auf 126% erhöhen. Es wird somit mehr als ein Viertel der ursprünglichen Querschnittsfläche hinzugewonnen. Dieser Effekt beruht darauf, dass die Anschlussöffnung 40 der ersten Kammer 38 in Richtung auf die erste Strömungsöffnung 28 verschoben wird. Durch die zusätzlich asymmetrische Ausgestaltung wirkt sich der Versatz besonders effektiv aus.

Wie aus der Gegenüberstellung in Fig. 9 erkennbar werden die den Differenzdruck wesentlich mitbeeinflussenden "engsten Stellen" E₁ sowie E₂ deutlich entschärft.

### Bezugszeichenliste

- 11: Adapter
- 12: Filterelement
- 13: Filteranschlussgehäuse
- 14: erste Öffnung
- 15: zweite Öffnung (filterseitig)
- 16: erster Öffnungsquerschnitt
- 17: zweiter Öffnungsquerschnitt
- 18: Verengung
- 19: Erweiterung
- 20: Wandung
- 21: Strömungskanal
- 22: Strömungsleitfläche
- 25: Dichteinrichtung
- 27: Ein- bzw. Auströmfläche
- 28: erste Strömungsöffnung (Filteranschlussgehäuse)
- 29: zweite Strömungsöffnung (Filteranschlussgehäuse)
- 30: Grundkörper
- 31: Deckel
- 32, 33: Anschlussflansche
- 34: Oberseite
- 35: Unterseite
- 36: Filteranschlussöffnung
- 37: Trennwand
- 38: erste Kammer
- 39: zweite Kammer
- 40: Anschlussöffnung (erste Kammer)
- 41: Öffnung (zweite Kammer)
- 42: Anschlussprofil
- 43: Filtermantel
- 44: Kanal
- 45: Filterabdeckkappe
- 46: Bajonettverschluss
- 47: Vorraum
- 48: Entlüftungsvorrichtung
- 49: abdichtende Scheibe
- 50: Sicherungsschraube
- 51: Bohrung
- 52: Verbindungsbohrung
- 53: Nut (Dichteinrichtung)

## Patentansprüche

1. Druckluftfilter-Adapter zum Anschluss eines Filterelements (12) an ein Filteranschlussgehäuse (13),
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14) und an einem zweiten Ende durch eine zweite Öffnung (15) begrenzt wird,
- wobei die erste Öffnung (14) zum Anschluss an ein Filteranschlussgehäuse (13) vorgesehen ist und einen Öffnungsquerschnitt (16) ausbildet, und
- wobei die zweite Öffnung (15) eine filterseitige Öffnung definiert und einen zweiten Öffnungsquerschnitt (17) ausbildet,
- wobei erste und zweite Öffnung (14, 15) zueinander versetzt sind, derart dass der Flächenschwerpunkt der ersten Öffnung (14) gegenüber der vom Flächenschwerpunkt der zweiten Öffnung (15) ausgehenden Normalen in eine Versatzrichtung (R) verschoben ist,
- und wobei der erste Öffnungsquerschnitt (16) eine von der Kreisform abweichende Grundform aufweist,
wobei bezogen auf die Versatzrichtung (R) eine Verengung (18) sowie eine Erweiterung (19) definiert sind,
wobei in der Projektion des ersten Öffnungsquerschnitts (16) auf den zweiten Öffnungsquerschnitt (17) der erste Öffnungsquerschnitt (16) teilweise außerhalb des zweiten Öffnungsquerschnitts (17) liegt.

2. Adapter nach Anspruch 1,
**dadurch gekennzeichnet, dass**
die Erweiterung (19) in Versatzrichtung (R) und die Verengung (18) entgegen der Versatzrichtung (R) ausgebildet ist.

3. Adapter nach Anspruch 1 oder 2,
**dadurch gekennzeichnet, dass**
der erste Öffnungsquerschnitt (16) die Grundform eines gleichschenkligen Dreiecks aufweist, wobei der der Spitze des gleichschenkligen Dreiecks zugewandte Bereich die Verengung (18) und der der Basis zugewandte Bereich die Erweiterung (19) ausbildet.

4. Adapter nach Anspruch 3,
**dadurch gekennzeichnet, dass**
der erste Öffnungsquerschnitt (16) die Grundform eines gleichschenkligen Dreiecks aufweist, bei dem die Ecken gerundet ausgebildet sind.

5. Adapter nach einem Ansprüche 1 bis 4,
**dadurch gekennzeichnet, dass**
erster Öffnungsquerschnitt (16) und zweiter Öffnungsquerschnitt (17) im Wesentlichen parallel zueinander angeordnet sind.

6. Adapter nach einem der Ansprüche 1 bis 5,
**dadurch gekennzeichnet, dass**
der Adapter (11) als separates Bauteil zum Anschluss sowohl an ein Filterelement (12) als auch an das Filteranschlussgehäuse (13) ausgebildet ist.

7. Adapter nach einem der Ansprüche 1 bis 5,
**dadurch gekennzeichnet, dass**
der Adapter (11) integral an das Filterelement (12) angeformt ist und mit diesem eine Filtereinheit bildet.

8. Adapter nach einem der Ansprüche 1 bis 7,
**dadurch gekennzeichnet, dass**
die Wandung des Adapters (11) eine außen liegende Strömungsleitfläche ausbildet bzw. aufweist, um einen außen am Adapter (11) vorbeigeführten Druckluftstrom zu führen.

9. Adapter nach Anspruch 8,
**dadurch gekennzeichnet, dass**
die Strömungsleitfläche (22) dem Versatz zwischen erster Öffnung (14) und zweiter Öffnung (15) im Wesentlichen folgt.

10. Adapter nach einem der Ansprüche 1 bis 9,
**dadurch gekennzeichnet, dass**
in der Projektion des ersten Öffnungsquerschnittes (16) auf den zweiten Öffnungsquerschnitt (17) der zweite Öffnungsquerschnitt (17) teilweise außerhalb des ersten Öffnungsquerschnittes (16) liegt.

11. Adapter nach einem der Ansprüche 1 bis 10,
**dadurch gekennzeichnet, dass**
in der Projektion des zweiten Öffnungsquerschnittes (17) auf den ersten Öffnungsquerschnitt (16) der erste Öffnungsquerschnitt (16) teilweise außerhalb des zweiten Öffnungsquerschnittes (17) liegt.

12. Adapter nach einem der Ansprüche 1 bis 11,
**dadurch gekennzeichnet, dass**
in der Projektion des zweiten Öffnungsquerschnittes (17) auf den ersten Öffnungsquerschnitt (16) der zweite Öffnungsquerschnitt (17) teilweise außerhalb des ersten Öffnungsquerschnitts (16) liegt.

13. Adapter nach einem der Ansprüche 1 bis 12,
**dadurch gekennzeichnet, dass**
an der Wandung (20) eine umlaufende Dichteinrichtung (25) zur Herstellung einer fluiddichten Abdichtung gegenüber dem Filteranschlussgehäuse bei in Betriebsposition eingesetzten Filterelement (12) ausgebildet ist.

14. Filterelement umfassend einen Filtermantel (43) mit einer flächigen Ein- bzw. Ausströmfläche (27), wobei das Filterelement eine zylindrische Grundstruktur aufweist, sowie einen integral angeformten Adapter nach einem der Ansprüche 1 bis 13.

15. Filteranordnung umfassend ein Filteranschlussgehäuse (13), ein Filterelement (12) sowie einen Adapter (11) nach einem der Ansprüche 1 bis 13,
wobei der Adapter (11) zum Anschluss des Filterelements (12) an das Filteranschlussgehäuse (13) ausgebildet und bestimmt ist.

16. Verfahren zum Anschließen eines Filterelements (12) an ein Filteranschlussgehäuse (13),
- wobei das Filteranschlussgehäuse (13) eine erste Strömungsöffnung (28) sowie eine zweite Strömungsöffnung (29) aufweist,
- wobei ein Adapter zum Anschluss des Filterelements (12) an das Filteranschlussgehäuse (13) verwendet wird,
- wobei der Adapter (11) einen durch eine Wandung (20) umschlossenen Strömungskanal (21) für Druckluft aufweist,
- wobei der Strömungskanal (21) an einem ersten Ende durch eine erste Öffnung (14) und an einem zweiten Ende durch eine zweite Öffnung (15) begrenzt wird,
- wobei die erste Öffnung (14) zum Anschluss an ein Filteranschlussgehäuse (13) vorgesehen ist und einen Öffnungsquerschnitt (16) ausbildet, und
- wobei die zweite Öffnung (15) eine filterseitige Öffnung definiert und einen zweiten Öffnungsquerschnitt (17) ausbildet,
- wobei erste und zweite Öffnung (14, 15) zueinander versetzt sind, derart dass der Flächenschwerpunkt der ersten Öffnung (14) gegenüber der vom Flächenschwerpunkt der zweiten Öffnung (15) ausgehenden Normalen in eine Versatzrichtung (R) verschoben ist,
- wobei der erste Öffnungsquerschnitt (16) eine von der Kreisform abweichende Grundform mit einer Verengung (18) und einer der Verengung (18) gegenüberliegenden Erweiterung (19) aufweist,
- wobei in der Projektion des ersten Öffnungsquerschnitts (16) auf den zweiten Öffnungsquerschnitt (17) der erste Öffnungsquerschnitt (16) teilweise außerhalb des zweiten Öffnungsquerschnitts (17) liegt, und
- wobei das Filterelement (12) über einen Adapter (11) druckfluiddicht mit dem Filteranschlussgehäuse (13) derart verbunden ist, dass der Strömungsweg von der ersten Strömungsöffnung (28) zur zweiten Strömungsöffnung (29) über das Filterelement (12) geführt ist.

## Claims

1. A compressed air filter adapter for connecting a filter element (12) to a filter connection housing (13),
- wherein the adapter (11) has a flow duct (21) enclosed by a wall (20) for compressed air,
- wherein the flow duct at one end is delimited by a first opening (14) and at a second end by a second opening (15),
- wherein the first opening (14) is provided for connection to filter connection housing (13) and forms an opening cross-section (16), and
- wherein the second opening (15) defines an opening on the filter side and forms a second opening cross-section (17),
- wherein the first and second openings (14, 15) are mutually offset such that the centroid of the first opening (14) is displaced with respect to the normal extending from the centroid of the second opening (15) in an offset direction (R),
- and wherein the first opening cross-section (16) has a basic shape deviating from the circular shape,
wherein a constriction (18) as well as an expansion (19) are defined with regard to the offset direction (R),
wherein in the projection of the first opening cross-section (16) onto the second opening cross-section (17), the first opening cross-section (16) is situated partly outside the second opening cross-section (17).

2. The adapter according to claim 1,
**characterized in that**
the expansion (19) is formed in the offset direction (R) and the constriction (18) in the direction opposite the offset direction (R).

3. The adapter according to claim 1 or 2,
**characterized in that**
the first opening cross-section (16) exhibits the basic shape of an isosceles triangle, wherein the area facing the tip of the isosceles triangle forms the constriction (18) and the area facing the base the expansion (19).

4. The adapter according to claim 3,
**characterized in that**
the first opening cross-section (16) exhibits the basic shape of an isosceles triangle, the corners of which are formed to be rounded.

5. The adapter according to any one of claims 1 to 4,
**characterized in that**
first opening cross-section (16) and second opening cross-section (17) are arranged substantially parallel to each other.

6. The adapter according to any one of claims 1 to 5,
**characterized in that**
the adapter (11) is formed as a separate component for connection to a filter element (12) as well as to the filter connection housing (13).

7. The adapter according to any one of claims 1 to 5,
**characterized in that**
the adapter (11) is integrally molded to the filter element (12) and forms a filter unit with same.

8. The adapter according to any one of claims 1 to 7,
**characterized in that**
the adapter (11) wall forms, respectively exhibits, an exterior flow guiding surface for guiding a compressed air flow guided past the outside of the adapter (11).

9. The adapter according to claim 8,
**characterized in that**
the flow guiding surface (22) substantially follows the offset between the first opening (14) and the second opening (15).

10. The adapter according to any one of claims 1 to 9,
**characterized in that**
in the projection of the first opening cross-section (16) onto the second opening cross-section (17), the second opening cross-section (17) is situated partly outside the first opening cross-section (16).

11. The adapter according to any one of claims 1 to 10,
**characterized in that**
in the projection of the second opening cross-section (17) onto the first opening cross-section (16), the first opening cross-section (16) is situated partly outside the second opening cross-section (17).

12. The adapter according to any one of claims 1 to 11,
**characterized in that**
in the projection of the second opening cross-section (17) onto the first opening cross-section (16), the second opening cross-section (17) is situated partly outside the first opening cross-section (16).

13. The adapter according to any one of claims 1 to 12,
**characterized in that**
a circumferential sealing means (25) is formed on the wall (20) for establishing a fluid-tight seal with respect to the filter connection housing when the filter element (12) is inserted in operational position.

14. A filter element comprising a filter shell (43) having a two-dimensional inflow/ outflow surface (27), wherein the filter element exhibits a cylindrical basic structure as well as an integrally molded adapter according to any one of claims 1 to 13.

15. A filter arrangement comprising a filter connection housing (13), a filter element (12), as well as an adapter (11) according to any one of claims 1 to 13, wherein the adapter (11) is formed and intended for connecting the filter element (12) to the filter connection housing (13).

16. A method for connecting a filter element (12) to a filter connection housing (13),
- wherein the filter connection housing (13) exhibits a first flow opening (28) as well as a second flow opening (29),
- wherein an adapter is used to connect the filter element (12) to the filter connection housing (13),
- wherein the adapter (11) has a flow duct (21) enclosed by a wall (20) for compressed air,
- wherein the flow duct (21) at one end is delimited by a first opening (14) and at a second end by a second opening (15),
- wherein the first opening (14) is provided for connection to a filter connection housing (13) and forms an opening cross-section (16), and
- wherein the second opening (15) defines an opening on the filter side and forms a second opening cross-section (17),
- wherein the first and second openings (14, 15) are mutually offset such that the centroid of the first opening (14) is displaced with respect to the normal extending from the centroid of the second opening (15) in an offset direction (R),
- wherein the first opening cross-section (16) has a basic shape deviating from the circular shape having a constriction (18) and an expansion (19) opposite the constriction (18),
- wherein in the projection of the first opening cross-section (16) onto the second opening cross-section (17), the first opening cross-section (16) is situated partly outside the second opening cross-section (17), and
- wherein the filter element (12) is in fluid-tight connection with the filter connection housing (13) via an adapter (11) such that the flow path from the first flow opening (28) to the second flow opening (29) is guided via the filter element (12).

## Revendications

1. Adaptateur de filtre à air comprimé pour le raccordement d'un élément de filtre (12) à un carter de raccordement de filtre (13),
- l'adaptateur (11) présentant un canal d'écoulement (21) pour air comprimé ceint par une paroi (20),
- le canal d'écoulement (21) étant limité par un premier orifice (14) à une première extrémité et par un deuxième orifice (15) à une deuxième extrémité,
- le premier orifice (14) étant prévu pour le raccordement à un carter de raccordement de filtre (13) et constituant une section d'orifice (16), et
- le deuxième orifice (15) définissant un orifice côté filtre et constituant une deuxième section d'orifice (17),
- les premier et deuxième orifices (14, 15) étant décalés l'un par rapport à l'autre de telle façon que le centroïde du premier orifice (14) soit déporté dans un sens de décalage (R) par rapport à la normale partant du centroïde du deuxième orifice (15),
- et la première section d'orifice (16) présentant une forme de base différente de la forme circulaire,
un rétrécissement (18) ainsi qu'un élargissement (19) étant définis par rapport au sens de décalage (R),
la première section d'orifice (16) étant en partie située en dehors de la deuxième section d'orifice (17) dans la projection de la première section d'orifice (16) sur la deuxième section d'orifice (17).

2. Adaptateur selon la revendication 1,
**caractérisé en ce que**
l'élargissement (19) est constitué dans le sens de décalage (R) et le rétrécissement (18) est constitué dans le sens opposé au sens de décalage (R).

3. Adaptateur selon la revendication 1 ou 2,
**caractérisé en ce que**
la première section d'orifice (16) présente la forme de base d'un triangle isocèle, la zone tournée vers le sommet du triangle isocèle constituant le rétrécissement (18) et la zone tournée vers la base constituant l'élargissement (19).

4. Adaptateur selon la revendication 3,
**caractérisé en ce que**
la première section d'orifice (16) présente la forme de base d'un triangle isocèle dans lequel les coins sont constitués de façon arrondie.

5. Adaptateur selon l'une des revendications 1 à 4,
**caractérisé en ce que**
la première section d'orifice (16) et la deuxième section d'orifice (17) sont sensiblement disposées parallèlement l'une à l'autre.

6. Adaptateur selon l'une des revendications 1 à 5,
**caractérisé en ce que**
l'adaptateur (11) est constitué comme composant distinct pour le raccordement aussi bien à un élément de filtre (12) qu'au carter de raccordement de filtre (13).

7. Adaptateur selon l'une des revendications 1 à 5,
**caractérisé en ce que**
l'adaptateur (11) est intégralement relié par moulage à l'élément de filtre (12) et forme une unité de filtre avec celui-ci.

8. Adaptateur selon l'une des revendications 1 à 7,
**caractérisé en ce que**
la paroi de l'adaptateur (11) constitue et/ou présente une surface de guidage d'écoulement extérieure afin de mener un flux d'air comprimé qui est mené extérieurement à côté de l'adaptateur (11).

9. Adaptateur selon la revendication 8,
**caractérisé en ce que**
la surface de guidage d'écoulement (22) suit sensiblement le décalage entre le premier orifice (14) et le deuxième orifice (15).

10. Adaptateur selon l'une des revendications 1 à 9,
**caractérisé en ce que**
la deuxième section d'orifice (17) est en partie située en dehors de la première section d'orifice (16) dans la projection de la première section d'orifice (16) sur la deuxième section d'orifice (17).

11. Adaptateur selon l'une des revendications 1 à 10,
**caractérisé en ce que**
la première section d'orifice (16) est en partie située en dehors de la deuxième section d'orifice (17) dans la projection de la deuxième section d'orifice (17) sur la première section d'orifice (16).

12. Adaptateur selon l'une des revendications 1 à 11,
**caractérisé en ce que**
la deuxième section d'orifice (17) est en partie située en dehors de la première section d'orifice (16) dans la projection de la deuxième section d'orifice (17) sur la première section d'orifice (16).

13. Adaptateur selon l'une des revendications 1 à 12,
**caractérisé en ce que**
un dispositif d'étanchéité (25) périphérique servant à réaliser une étanchéité aux fluides par rapport au carter de raccordement de filtre lorsque l'élément de filtre (12) est placé en position de service, est constitué sur la paroi (20).

14. Elément de filtre comportant une enveloppe de filtre (43) ayant une surface d'écoulement d'entrée ou de sortie (27) plane, l'élément de filtre présentant une structure de base cylindrique, ainsi qu'un adaptateur intégralement relié par moulage selon l'une des revendications 1 à 13.

15. Montage de filtre comportant un carter de raccordement de filtre (13), un élément de filtre (12) ainsi qu'un adaptateur (11) selon l'une des revendications 1 à 13, l'adaptateur (11) étant constitué et prévu pour le raccordement de l'élément de filtre (12) au carter de raccordement de filtre (13).

16. Procédé de raccordement d'un élément de filtre (12) à un carter de raccordement de filtre (13),
- le carter de raccordement de filtre (13) présentant un premier orifice d'écoulement (28) ainsi qu'un deuxième orifice d'écoulement (29),
- un adaptateur étant employé pour le raccordement de l'élément de filtre (12) au carter de raccordement de filtre (13),
- l'adaptateur (11) présentant un canal d'écoulement (21) pour air comprimé ceint par une paroi (20),
- le canal d'écoulement (21) étant limité par un premier orifice (14) à une première extrémité et par un deuxième orifice (15) à une deuxième extrémité,
- le premier orifice (14) étant prévu pour le raccordement à un carter de raccordement de filtre (13) et constituant une section d'orifice (16), et
- le deuxième orifice (15) définissant un orifice côté filtre et constituant une deuxième section d'orifice (17),
- les premier et deuxième orifices (14, 15) étant décalés l'un par rapport à l'autre de telle façon que le centroïde du premier orifice (14) soit déporté dans un sens de décalage (R) par rapport à la normale partant du centroïde du deuxième orifice (15),
- la première section d'orifice (16) présentant une forme de base différente de la forme circulaire avec un rétrécissement (18) et un élargissement (19) situé du côté opposé au rétrécissement (18),
- la première section d'orifice (16) étant en partie située en dehors de la deuxième section d'orifice (17) dans la projection de la première section d'orifice (16) sur la deuxième section d'orifice (17), et
- l'élément de filtre (12) étant relié au carter de raccordement de filtre (13) de manière étanche aux fluides via un adaptateur (11) de telle façon que le chemin d'écoulement soit mené du premier orifice d'écoulement (28) vers le deuxième orifice d'écoulement (29) via l'élément de filtre (12).
